# EUROPEAN PATENT APPLICATION

(11) **EP 1 840 519 A2**
(43) Date of publication of application: **03.10.2007**
(21) Application number: 07105038.9
(22) Date of filing: 27.03.2007
(51) Int. Cl.: G01C 21/34

(54) **Route search method and navigation apparatus**

(30) Priority: 28.03.2006 JP 2006088452
(71) Applicant: Aisin AW Co., Ltd., Fujii-cho Anjo Aichi 444-1192 (JP)
(72) Inventor: KANO, Toshihiro, Okazaki Aichi 444-8564 (JP); NAKAJIMA, Akihiro, Okazaki Aichi 444-8564 (JP)
(74) Representative: TBK-Patent

(57) **Abstract**

A navigation unit detects adjacent regions with factors, such as weekdays and holidays in the regions, that are different at the same time point based on calendar data stored in a calendar data storing unit. If such regions are detected, the navigation unit calculates a correction cost, i.e., an intermediate value of traffic statistical data for each factor, with respect to links indicating roads near a boundary between the regions. The correction cost is then used to perform a route search.

## Description

The disclosure of Japanese Patent Application No. 2006-088452 filed on March 28, 2006 including the specification, drawings and abstract is incorporated herein by reference in its entirety.

### 1. Field of the Invention

The present invention relates to a route search method and a navigation apparatus.

### 2. Description of the Related Art

Development of Intelligent Transport Systems (ITS) has advanced in recent years to achieve smoother automobile travel. One field in this development involves increasing the sophistication of navigation systems. For example, a navigation apparatus performs route guidance for avoiding real-time traffic congestion by receiving traffic congestion information sent from beacons and FM multiple broadcasting via the function of the Vehicle Information and Communication System (VICS). A system is also being developed to gather probe information that indicates automobile travel conditions from beacons or the like in order to generate statistical traffic information.

Japanese Patent Application Publication No. JP-A-2005-17151 proposes a navigation apparatus that gather and stores such statistical traffic information. The navigation apparatus queries whether a distribution center has statistical traffic information that is more current than the statistical traffic information stored in the navigation apparatus. If there is newer data, then the navigation apparatus downloads the data and updates its statistical traffic information. The statistical traffic information is hierarchically classified by type such as days of the week and holidays and by conditions such as weather, and includes statistics such as link travel times and degrees of link traffic congestion.

However, the factors behind fluctuating traffic conditions may differ between neighboring regions, such as different holidays or workdays at national borders, provincial borders and the like. In these cases, roads in the vicinity of such borders take on special conditions that do not fall under weekday traffic conditions or holiday traffic conditions. As a consequence, sometimes accurate routes could not be searched using statistical traffic information for either factor. Solving such a problem by storing one year's worth of daily (365 days of) traffic statistical data raised other problems such as slower statistical calculations due to the enormous amount of collected data, as well as the enormous amount of data that must be stored in the navigation apparatus.

The present invention was devised in light of the foregoing problems, and it is an object of the present invention to provide a route guidance method, which is capable of searching for an accurate route even in cases where there are regions with a different fluctuation factor for traffic conditions, and a navigation apparatus.

According to a first aspect of the present invention, if a fluctuation factor for traffic conditions, such as a day being a holiday, is mutually different between regions at the same time element, then a route search is performed by using an intermediate value that takes into account traffic forecast data for the fluctuation factor. Therefore, regardless of whether fluctuation factors of traffic conditions such as holiday/weekday status change when national or other borders are crossed, an accurate route search can be performed that reflects actual traffic conditions.

According to a second aspect of the present invention, route calculation data is generated by using the respective traffic forecast data corresponding to the fluctuation factors, if a calendar element for adjacent regions is different. A route search is performed by using the generated route calculation data. Therefore, an optimum route search can be performed regardless of whether national or prefectural borders are crossed.

According to a third aspect of the present invention, the route calculation data is generated for roads where a distance from a boundary line of the adjacent regions with the different fluctuation factors is within a predetermined distance. Therefore, almost all roads to which the route calculation data is applicable can be included and easily identified.

According to a fourth aspect of the present invention, the route calculation data is generated for a road within the adjacent regions, which is between clusters with a high vehicle movement frequency. Thus, for roads where traffic conditions are considerably different depending on the calendar element between regions, route calculation data can be used that takes into account such differences. Therefore, an optimum route search can be performed.

According to a fifth aspect of the present invention, the route calculation data is generated for a road with a high vehicle movement frequency among the roads connecting the clusters. Therefore, the route calculation data can be generated for the minimum required roads applicable.

According to a sixth aspect of the present invention, if the fluctuation factor inside a predetermined distance range centered around a facility differs with the fluctuation factor outside the predetermined distance range, then the route calculation data is generated for a road near the predetermined distance range. Therefore, the route calculation data is set for the road if the fluctuation factors are different, even if there are no boundary lines such as national borders. Consequently, an accurate route search can be performed.

According to a seventh aspect of the present invention, the fluctuation includes any one of a weekday, a holiday, and a time period. Therefore, the main factors for traffic conditions can be used as data, thereby enabling a more accurate forecast of traffic conditions. In addition, data is not retained for every day in one year. Therefore, only the minimum required amount of data need be amassed.

According to an eighth aspect of the present invention, the traffic forecast data can be combined at a predetermined ratio to generate the route calculation data. Therefore, the processing load for calculating the route calculation data can be lightened.
FIG. 1 is an explanatory drawing of a navigation system according to a first embodiment;
FIG. 2A is an explanatory drawing of route data, and FIG. 2B is of map data;
FIG. 3A is an explanatory drawing of calendar data for a region A, and FIG. 3B is for a region B;
FIG. 4 is an explanatory drawing of traffic statistical data;
FIG. 5 is an explanatory drawing of a processing procedure in the first embodiment;
FIG. 6 is an explanatory drawing of a link that calculates a correction cost;
FIG. 7 is an explanatory drawing of a route search;
FIG. 8 is an explanatory drawing of a processing procedure in the second embodiment;
FIG. 9 is an explanatory drawing of movement statistical data;
FIG. 10 is an explanatory drawing of a correction cost calculation focused on clusters;
FIG. 11 is an explanatory drawing of another example of the correction cost calculation; and
FIG. 12 is an explanatory drawing of yet another example of the correction cost calculation.

### First Embodiment

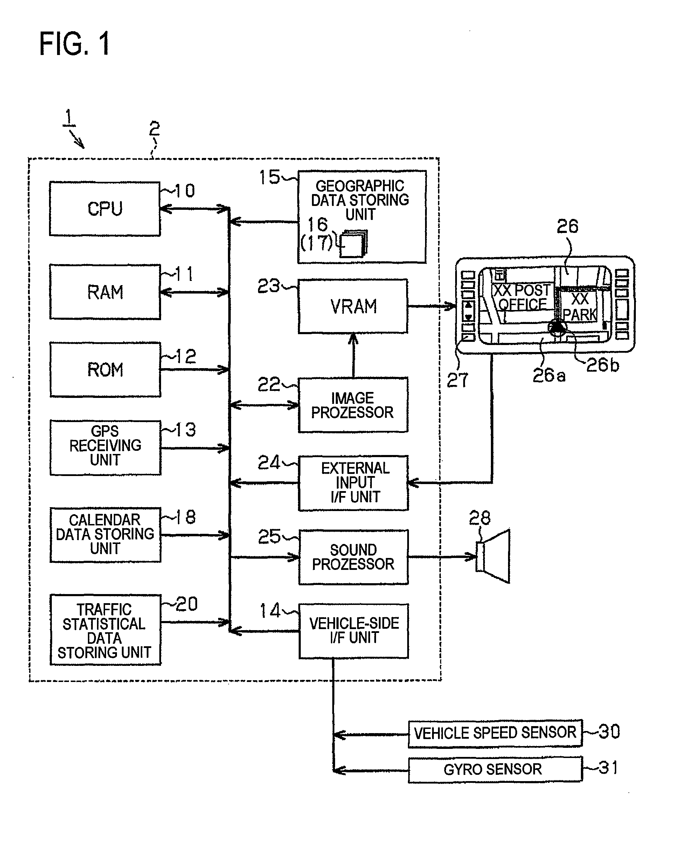

Hereinafter, a first embodiment that realizes the present invention will be explained with reference to FIGS. 1 to 7. FIG. 1 is an explanatory drawing of a navigation system 1 according to the present embodiment, which is mounted in an automobile.

Referring to FIG. 1, a navigation system 1 is structured by a navigation unit 2 acting as a navigation apparatus. The navigation unit 2 includes: a CPU 10 acting as a calculation data generating unit, a factor judging unit, and a route searching unit; a RAM 11; a ROM 12 that stores programs for route guidance; and a GPS receiving unit 13. The CPU 10 inputs a position detection signal indicating coordinates such as longitude and latitude, which was received by the GPS receiving unit 13 from a Global Positioning System (GPS) satellite. The CPU 10 then calculates an absolute position of its own vehicle based on electronic navigation. In addition, the CPU 10 respectively inputs a vehicle speed pulse and an angular acceleration from a vehicle speed sensor 30 and a gyro sensor 31, which are provided in the vehicle, via a vehicle-side I/F unit 14 included in the navigation unit 2. Based on autonomous navigation using the vehicle speed pulse and the angular acceleration, the CPU 10 calculates a relative position from a reference position, and combines this with the absolute position calculated from electronic navigation to identify its own vehicle position.

The navigation unit 2 also includes a geographic data storing unit 15. The geographic data storing unit 15 is an external storage medium such as a built-in hard disc or an optical disc. Stored in the geographic data storing unit 15 are various route network data (hereinafter referred to as route data 16) for searching routes to a destination, and various map data 17 for outputting a map screen 26a to a display 26 that acts as an output mechanism.

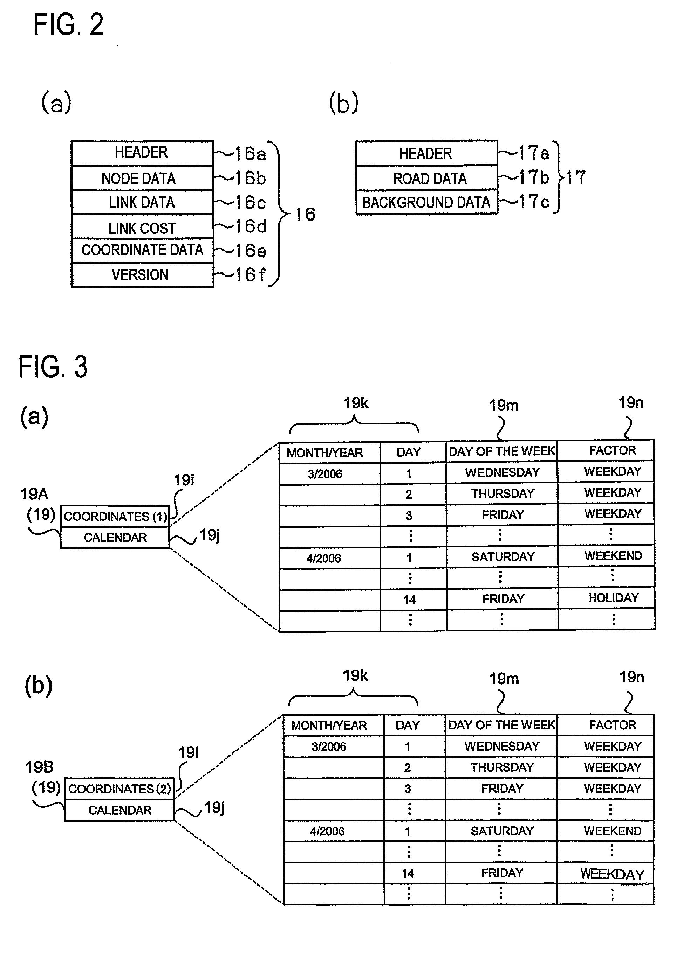

Referring to FIG. 2A, the route data 16 are data with respect to each region, such regions corresponding to zoned sections of a country. The route data 16 comprises: a header 16a, node data 16b that includes a node number or the like to indicate an intersection or a road dead end; link data 16c that includes an ID or the like for links between nodes; a link cost 16d; coordinate data 16e that indicates coordinates for nodes and links; and a version 16f. The header 16a stores numbers or the like for meshes zoning the country. Included in the link data 16c are data such as a link ID, a connection node, and traffic regulations. The link cost 16d is data based on the link length of each link, and is a fixed value.

The map data 17 is stored for every mesh (parcel) dividing a map of the country, and is separated into layers from wide area maps down to small area maps. Referring to FIG. 2B, the map data 17 comprises: a header 17a; road data 17b; and background data 17c. The header 17a includes a mesh number and data layers. The road data 17b are shape interpolation data, and data indicating road shapes such as road width to be displayed on a map. The background data 17c are plotting data that plot roads, urban areas, rivers, and the like.

An image processor 22 (see FIG. 1) provided in the navigation unit 2 reads out the map data 17 for plotting a map in the vicinity of one's own vehicle location from the geographic data storing unit 15 according to the CPU 10. The image processor 22 then generator output data, which is temporarily stored in a VRAM 23. Furthermore, the image processor 22 outputs a picture signal based on the output data to the display 26, such that the map screen 26a as shown in FIG. 1 is displayed. Also, the image processor 22 overlays a marker 26b indicating one's own vehicle position on the map screen 26a.

Referring to FIG. 1 again, the navigation unit 2 is further provided with the following: a calendar data storing unit 18 acting as a fluctuation factor data storing unit, which stores calendar data 19 as fluctuation factor data; and a traffic statistical data storing unit 20 acting as a traffic forecast data storing unit, which stores traffic statistical data 21 as traffic forecast data. The calendar data 19 is stored with respect to each country or state in the case or Europe or the like, and stored with respect to each region, i.e., city, prefecture or the like, in the case of Japan. FIGS. 3A and 3B shows different calendar data 19A, 19B for regions A, B, respectively. Note that when the calendar data 19A, 19B are not mutually distinguishable, these are described simply as calendar data 19.

Referring to FIGS. 3A and 3B, the calendar data 19 have coordinates 19i, which indicates the regions A, B, and a calendar 19j. The calendar 19j is data indicating an almanac of the region, and includes a date 19k, a day 19m as time factors, and a factor 19n as a fluctuation factor. The day 19m indicates a day of the week with respect to the dates 19k. The factor 19n indicates a fluctuation factor for traffic conditions, such as whether the day is a weekday, a holiday, and the like. The factors 19n are often identical at the same time point, regardless of different regions A, B, but sometimes the factors 19n mutually differ. For example, the factor 19n corresponding to "April 14" in region A is a holiday, while the factor 19n in region B is a weekday.

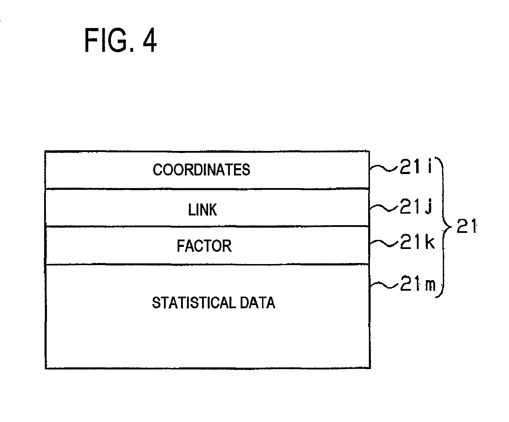

The traffic statistical data 21 are stored with respect to each region, and are data of traffic conditions for each region generated from gathering and applying statistical calculation to probe information or the like. As FIG. 4 shows, the traffic statistical data 21 include: coordinates 21i with respect to each region; a link 21j; a factor 21k that indicates type, such as weekday, holiday, or time period; and statistical data 21m that indicate road congestion conditions or the like for weekdays, holidays, or time periods. The factor 21k is a factor causing traffic conditions for each link 21j within a region indicated by the coordinates 21i. The factor 21k also corresponds to the factor 19n of the calendar data 19. Based on the calendar data 19, the CPU 10 judges the factor 19n for the time point per region, and searches for a route using the factor 19n, the traffic statistical data 21 corresponding to the time period, and the link cost 16d.

Referring to FIG. 1 again, the display 26 has operating switches 27 provided adjacent. Also, the display 26 is a touch panel. Following an input operation via the operating switches 27 or the touch panel, an external input I/F unit 24 provided in the navigation unit 2 outputs to the CPU 10 a signal corresponding to the input operation of the operating switches 27.

Furthermore, a sound processor 25 in the navigation unit 2 reads out sound data from a sound file database (not shown) in accordance with the control of the CPU 10. After performing a D/A conversion of the sound data, a sound signal or the like for route guidance is output to a speaker 28.

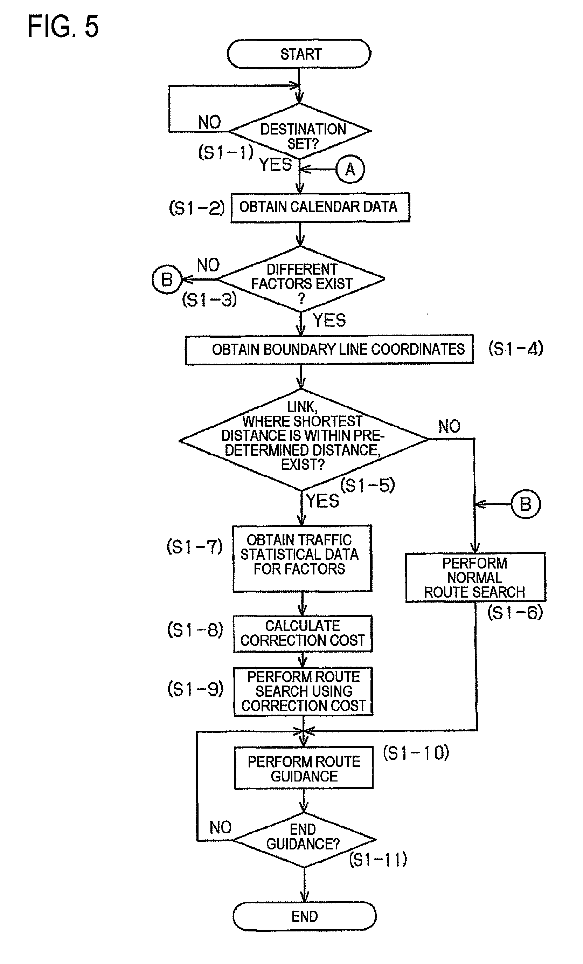

A processing procedure for route searching according to the present embodiment will be explained next with reference to FIG. 5. First, the CPU 10 judges whether a destination has been set in accordance with a route guidance program stored in the ROM 12 (step S1-1). At this time, the CPU 10 waits for signal input based on operation of the touch panel or operation of the operating switches 27. Following the input of a signal indicating the destination via the external input I/F unit 24, the CPU 10 calculates regions applicable to a route search, such as a region located between a current position of a vehicle C and the destination, and vicinities of the current position and the destination. The CPU 10 then obtains calendar data 19 for the regions (step S1-2). In this case, the CPU 10 obtains the current date 19k from a timer (not shown), and obtains the factor 19n corresponding to the date 19k from the calendar data 19 of the regions.

Based on the obtained factor 19n, the CPU 10 judges whether the factor 19n is different among the regions (step S1-3). If it is judged that there are no different factors 19n (NO at step S1-3), then the procedure proceeds to step S1-6, where a normal route search is performed. In this case, the CPU 10 searches for routes from the current position of the vehicle to the destination using the link cost 16d of the route data 16 or the like (step S1-6). Based on links, nodes, and the like indicating a route resulting from the route search, the image processor 22 uses the map data 17 for explaining one's own vehicle position and the route to display the map screen 26a, and provides guidance for a route to the destination (step S 1-10).

In addition, while performing route guidance the CPU 10 judges whether the guidance has ended (step S1-11). More specifically, the CPU 10 judges the following or the like: whether the destination has been reached; whether the destination has been changed; whether the route has been forcibly changed due to an external input signal indicating the occurrence of traffic congestion, or an operation by the user; and whether the guidance has been cancelled due an input operation by the user. By making such judgments, the CPU 10 judges whether the guidance has ended. If it is judged that guidance has not ended (NO at step S1-11), then the route guidance is repeated (step S1-12).

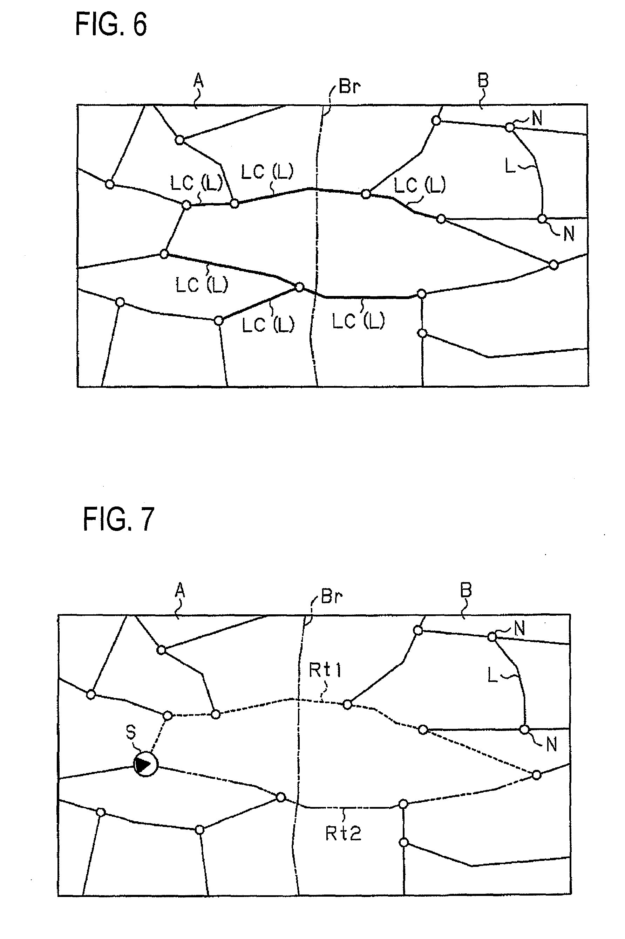

Alternatively at step S1-3, if it is judged that a different factor 19n exists (YES at step Sl-3), then the CPU 10 obtains coordinates for boundary lines of the regions A, B where mutually different factors 19n exist (step S1-4). In this case, the CPU 10 obtains the coordinates 19i of the calendar data 19 that corresponds to the adjacent regions A, B, and calculates coordinates of a boundary line Br (see FIG. 6) thereof.

After the coordinates of the boundary line Br is obtained, it is judged whether there exists a link LC at which the shortest distance from the boundary line Br is equal to or less than a predetermined distance D1 (step S1-5). In this case, the CPU 10 calculates the shortest distance from the boundary line Br with respect to links L near the coordinates of the boundary line Br. As FIG. 6 shows, links L intersecting the boundary line Br as boundaries are judged as the links LC of the predetermined distance D1 from the boundary line Br. For the links L in the vicinity of the boundary line Br that do not intersect the boundary line Br, the CPU 10 calculates the coordinates among the links L that are nearest the boundary line Br, or calculates the distance from intermediate points of the links L to the boundary line Br, etc., to find the distance between a link L and the boundary line Br. It is then judged whether such a distance is equal to or less than the predetermined distance D1.

If it is judged that there is no link L where the shortest distance from the boundary line Br is not equal to or less than the predetermined distance D1 (NO at step S1-5), then a normal route search is performed (step S1-6). If it is judged that there is a link L where the shortest distance from the boundary line Br is equal to or less than the predetermined distance D1 (YES at step S1-5), then the traffic statistical data 21, wherein the factors 21k are identical to the factors 19n for the regions A, B, are respectively obtained for the corresponding time period (step S1-7).

Furthermore, the CPU 10 uses the obtained traffic statistical data 21 to calculate a correction cost acting as route calculation data (step S1-8). In this case, for example, the CPU 10 may for the region A calculate an intermediate value between the statistical data 21m of the factor 21k for a holiday and the statistical data 21m of the factor 21k for a weekday, and set such an intermediate value as the correction cost. The intermediate value may be, for example, an average value of the respective statistical data 21m, or the sum of the products of multiplying the respective statistical data 21m by different predetermined coefficients.

The CPU 10 sets the correction cost calculated at step S1-8 with respect to the link LC where the shortest distance from the boundary line Br is equal to or less than the predetermined distance D1, and searches for routes from the current position of the vehicle to the destination (step S1-9). In this case, by using the correction cost with respect to the links LC close to the boundary line Br, it is possible to search for an easy-to-travel route reflecting actual traffic conditions that avoids traffic congestion and jams. For example, in the past a route Rt1 as shown in FIG. 7 would be searched by applying traffic statistical data 21 for a holiday afternoon time to the region A (see FIG. 7) where it is a holiday, and applying traffic statistical data 21 for a weekday afternoon time to the region B where it is a weekday. However, in reality, the traffic volume in the region B also increases due to the influence of region A where it is a holiday. Therefore, a new route Rt2 may be searched instead of the route Rt1 through a search using the correction cost with respect to links near the boundary line Br.

Following the route search, the CPU 10 controls the image processor 22 to display the map screen 26a in the vicinity of one's own vehicle position, while providing route guidance (step S1-10). The CPU 10 then judges whether to end the guidance (step S1-11). If ending the guidance is judged (NO at step S1-11), then the route guidance is repeated (step S1-10). If ending the guidance is judged (YES at step S1-11), then the processing is ended.

According to the first embodiment, effects such as the following can be obtained.
(1) In the first embodiment, the navigation unit 2 is provided with a calendar data storing unit 18 that stores the calendar data 19 with respect to each region. To perform a route search to a destination, the CPU 10 in the navigation unit 2 judges whether the factors 19n, such as weekday/holiday status, for each adjacent region at the same time point are mutually different based on the calendar data 19. If the factors 19n are mutually different, then the CPU 10 uses the traffic statistical data 21 corresponding to the respective factors 19n to generate a correction cost that compensates the statistical data 21m. The correction cost is used to search for routes to the destination. Therefore, regardless of whether fluctuation factors of traffic conditions such as holiday/weekday status change when national or prefectural borders are crossed, etc., an accurate route search can be performed by using the correction cost reflecting actual traffic conditions.
(2) In the first embodiment, the shortest distance from the boundary line Br between regions with mutually different factors 19n are used to calculate the correction cost with respect to the links LC within the predetermined distance D1. Thus, for example, almost all roads whose traffic conditions straddle weekdays and holidays can be included and easily identified.

### Second Embodiment

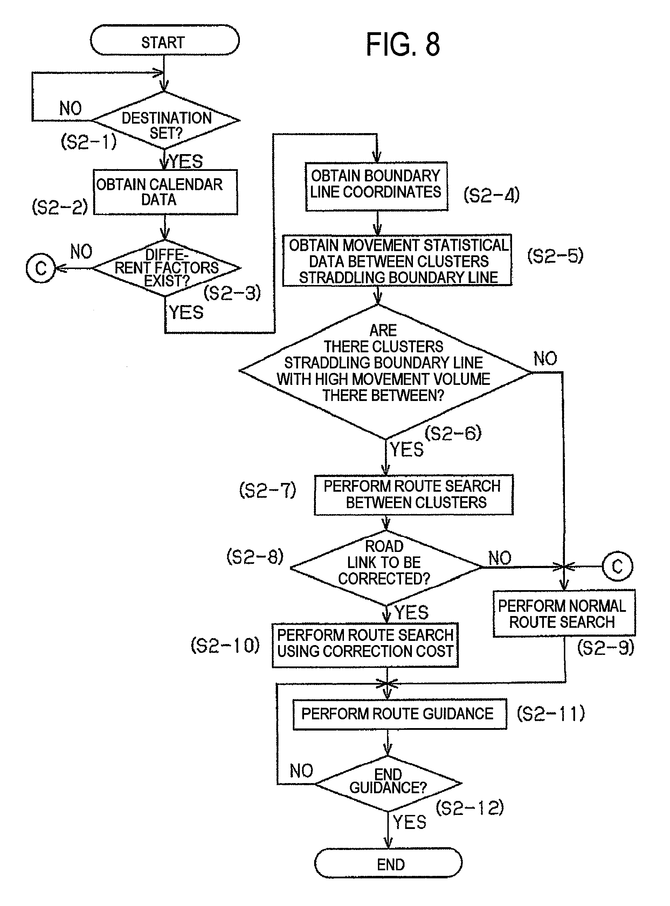

A second embodiment that realizes the present invention will be explained next with reference to FIGS. 8 to 10. Note that the second embodiment has the structure of the first embodiment, with only the processing procedure changed. Explanations of like portions are thus omitted below.

Referring to FIG. 8, according to the present embodiment, the CPU 10 obtains the calendar 19j for regions including from the current position to the destination and judges whether there are different factors 19n (steps S2-1 to S2-3), similar to steps Sl-1 to Sl-3 in the first embodiment. If there are different factors 19n (YES at step S2-3), then the CPU 10 obtains the coordinates of the boundary line Br (step S2-4).

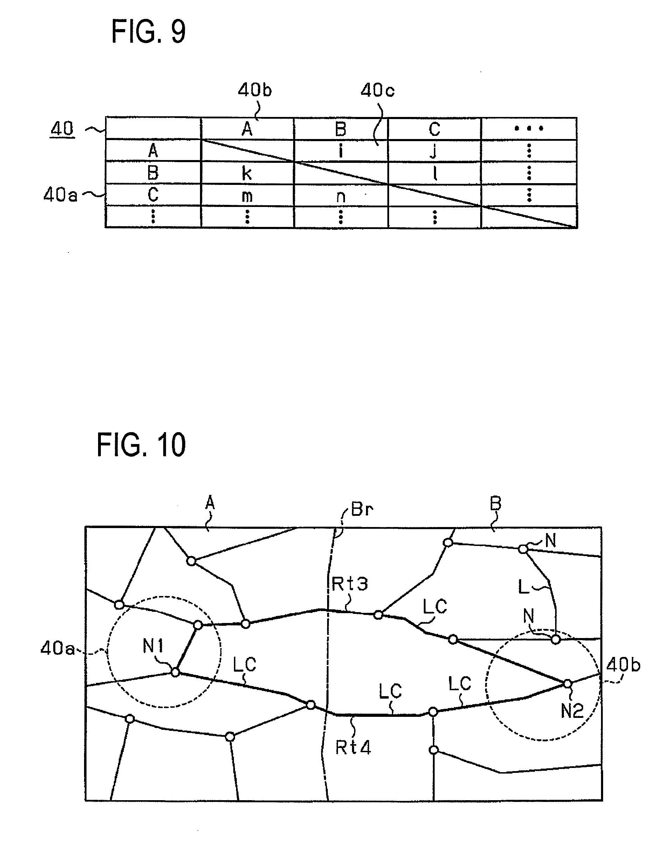

Furthermore, the CPU 10 obtains movement statistical data 40 between clusters straddling the boundary line Br (step S2-5). As FIG. 9 shows, the movement statistical data 40 is stored in the RAM 11 or the ROM 12, and indicates the frequency of vehicle movement between clusters. In the present embodiment, the movement statistical data 40 includes the approximate numbers of vehicles moving from clusters 40a to other clusters 40b (hereinafter referred to as a movement volume 40c), which are classified according to weekdays, weekends, holidays, and time periods. The CPU 10 uses data indicating cluster coordinates (not shown) among the movement statistical data 40 to obtain the movement volume 40c between the clusters 40a, 40b straddling the boundary line Br, as shown in FIG. 10.

Based on the obtained movement volume 40c, the CPU 10 judges whether there are clusters 40a, 40b between which a high movement volume 40a exists (step S2-6). In this case, the CPU 10 judges whether the obtained movement volumes 40c are equal to or greater than a threshold. If it is judged that there are clusters 40a, 40b between which high movement volumes 40c exist that are equal to or greater than the threshold (YES at step S2-6), then the procedure proceeds to step S2-7. If it is judged that there are no clusters 40a, 40b between which a high movement volume 40c exists (NO at step S2-6), then a normal route search is performed (step S2-9).

At step S2-7, the CPU 10 searches for routes between clusters 40a, 40b with high movement volumes 40c. As a consequence, as FIG. 10 shows, for example, a plurality of routes Rt3, Rt4 are detected that connect the clusters 40a, 40b. Based on a predetermined condition, it is then judged whether a link L correcting the traffic statistical data 21 exists among the detected routes (step S2-8). In the present embodiment, the condition is a road condition that indicates road width, road type, geographic environment, or the like. For example, the CPU 10 judges not to correct the traffic statistical data 21 (NO at step S2-8) if the driving operation would not be easy due to the existence of mountains with a high elevation, etc., between the clusters 40a, 40b according to the road data 17b or the like. Alternatively, the CPU 10 also judges not to correct the traffic statistical data 21 (NO at step S2-8) if the road width is narrow, or there are sharp curves that make driving difficult. A normal route search is subsequently performed (step S2-7).

If the routes Rt3, Rt4 between the clusters 40a, 40b are easy-to-travel routes, then at step S2-10 the CPU 10 averages the traffic statistical data 21 for the factors 21k at each link LC, and uses the correction cost generated by combining the statistical data 21m at a predetermined combined ratio to search for a route to the destination. After performing the route search, the map screen 26a is displayed and guidance for the route to the destination is performed (step S2-11).

In addition, while performing route guidance the CPU 10 judges whether to end the guidance (step S2-12). If ending the guidance is judged (YES at step S2-12), then the processing is ended. If ending the guidance is judged (NO at step S2-12), then the route guidance is continued (step S2-11).

Thus, according to the second embodiment, the following effect can be obtained in addition to the effects described for the first embodiment.
(3) Detected in the second embodiment are clusters 40a, 40b between which there is a high movement volume 40c, and which are in regions that have different factors 19n in terms of weekday/holiday status, etc., and are on opposite sides of the boundary line Br. If the clusters 40a, 40b between which there is a high movement volume 40c are detected, then a correction cost is generated and set with respect to routes connecting the clusters 40a, 40b. Thus, for roads where traffic conditions are considerably different depending on different factors 19n between regions, a correction cost can be used that takes into account such differences. Therefore, the minimum required number of links LC can be used to generate the correction cost and perform an accurate route search.

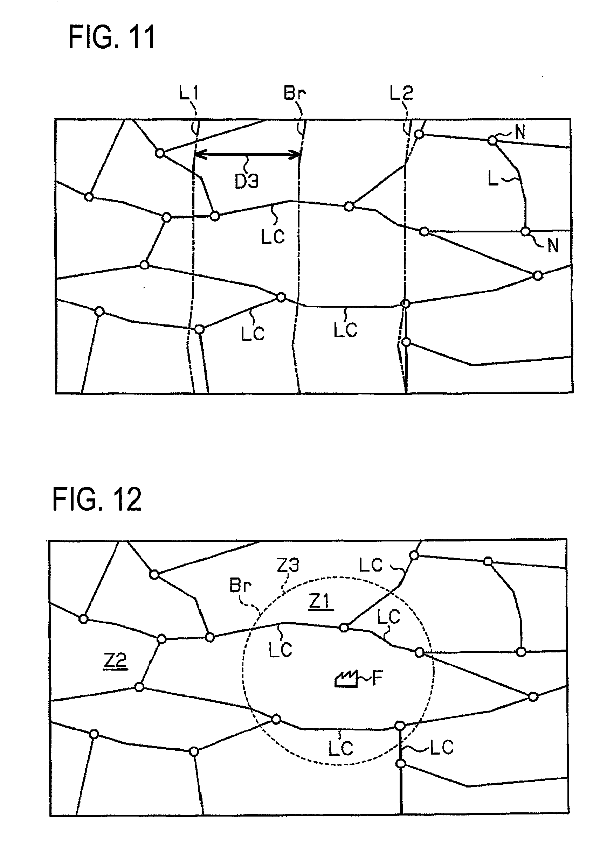

Note that the above embodiment may be modified as follows.
- The calendar data 19 has the factors 19n such as weekdays and holidays that act as fluctuation factors for traffic conditions. However, other fluctuation factors may also be set, such as the operating days of specific facilities, store business hours, weather, time periods, events, and seasons.
- The calendar data 19 has the date 19k that acts as a time element. However, the date 19k may be further broken down into hours or a time period. In such case, the fluctuation factors may also be modified in accordance with the time element broken down in this manner.
- The traffic statistical data are stored with respect to each region, and are data of traffic conditions for each region generated from gathering and applying statistical calculation to probe information or the like. However, the traffic statistical data may be data of traffic conditions that have been analyzed and forecast using other data and methods.
- In the above embodiments, the traffic statistical data 21 is stored for each factor 21k, which includes the region, links within regions, the type of day such as weekday or holiday, and the time period. However, the traffic statistical data 21 need not be stored for each time period. Furthermore, the traffic statistical data 21 need not be stored for each link.
- The navigation unit 2, as shown in FIG. 11, may set plot lines L1, L2 of a predetermined distance D3 from the boundary line Br between regions with different factors 19n. The correction cost may then be calculated with respect to the links L on the inner side of the plot lines L1, L2. In such case, the correction cost can be easily generated.
- The navigation unit 2, as shown in FIG. 12, may set a region Z1 centered around a facility F where there is much human movement, such as a factory or school, and set a region Z2 for the remaining area. The navigation unit 2 may then generate calendar data 19 and traffic statistical data 21 that take into account operating days, school days, or the like of the facility F. If there are mutually different factors 19n based on the regions Z1, Z2, then the correction cost may be generated with respect to the links LC near the boundary line Br.

A navigation unit detects adjacent regions with factors, such as weekdays and holidays in the regions, that are different at the same time point based on calendar data stored in a calendar data storing unit. If such regions are detected, the navigation unit calculates a correction cost, i.e., an intermediate value of traffic statistical data for each factor, with respect to links indicating roads near a boundary between the regions. The correction cost is then used to perform a route search.

## Claims

1. A route search method for searching a route to a destination, wherein
if a fluctuation factor for traffic conditions is mutually different in adjacent regions at an identical time element, then traffic forecast data for the fluctuation factor are used to generate route calculation data, and such route calculation data are used to perform a route search.

2. A navigation apparatus comprising:
a traffic forecast data storing unit (20) for storing traffic forecast data that indicates road traffic conditions for each fluctuation factor regarding traffic conditions;
a fluctuation factor data storing unit (18) for storing fluctuation factor data corresponding to a time element with respect to each region;
a factor judging unit (10) for detecting adjacent regions with different fluctuation factors for the same time element, based on the fluctuation factor data;
a calculation data generating unit (10) for generating route calculation data, if adjacent regions with different fluctuation factors have been detected, by using the traffic forecast data corresponding to the fluctuation factors of the regions; and
a route searching unit (10) for performing a route search by using the route calculation data for a road near a boundary between the regions.

3. The navigation apparatus according to claim 2, wherein
the calculation data generating unit generates the route calculation data for roads where a distance from a boundary line of the adjacent regions with the different fluctuation factors is within a predetermined distance.

4. The navigation apparatus according to claim 2 or 3, wherein
the calculation data generating unit generates the route calculation data for a road that connects clusters with different fluctuation factors.

5. The navigation apparatus according to claim 4, wherein
the route calculation data is generated for a road with a high vehicle movement frequency among the roads connecting the clusters.

6. The navigation apparatus according to any one of claims 2 to 5, wherein
the factor judging unit judges whether the fluctuation factor inside a predetermined distance range whose center is set as a preset facility differs with the fluctuation factor outside the predetermined distance range, and
the calculation data generating unit generates the route calculation data for a road near a boundary of the predetermined distance range, if the respective fluctuation factors inside the predetermined distance range and outside the predetermined distance range are different.

7. The navigation apparatus according to any one of claims 2 to 6, wherein
the fluctuation factor includes at least one of a weekday, a holiday, and a time period.

8. The navigation apparatus according to any one of claims 2 to 7, wherein
the calculation data generating unit combines the traffic forecast data at a predetermined ratio.
